# EUROPEAN PATENT SPECIFICATION

(11) **EP 1 834 998 B1**
(45) Date of publication and mention of the grant of the patent: **14.11.2012**
(21) Application number: 07005367.3
(22) Date of filing: 15.03.2007
(51) Int. Cl.: C09D 11/10, C09D 11/00

(54) **Mixture, method for storing ink composition, ink container, and image formation method**
Mischung, Verfahren zur Lagerung einer Tintenzusammensetzung, Tintenbehälter und Bilderzeugungsverfahren
Mélange, procédé pour le stockage d'encre, réservoir d'encre et procédé de formations d'images

(30) Priority: 16.03.2006 JP 2006072413
(43) Date of publication of application: 19.09.2007
(73) Proprietor: FUJIFILM Corporation, Minato-ku Tokyo (JP)
(72) Inventor: Kasai, Seishi, Haibara-gun Shizuoka (JP)
(74) Representative: HOFFMANN EITLE

(56) References cited:
- EP-A- 1 614 730
- EP-A- 1 621 594
- EP-A- 1 702 962
- EP-A- 1 754 758
- EP-A1- 1 285 952
- JP-A- 2003 305 839
- US-A- 5 515 085
- US-A1- 2003 200 900
- US-A1- 2004 052 967
- US-A1- 2005 159 506
- US-A1- 2005 187 309

## Description

The present invention relates to a mixture comprising a basic solid and an ink composition suitably used for inkjet recording and, in particular, to a mixture suitable for storing an ink composition. Furthermore, the present invention relates to a method for storing an ink composition, an ink container, and an image formation method.

With regard to an image recording method for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is , generated. On the other hand, with regard to the inkjet system, the equipment is inexpensive and, since an image is formed directly on a recording medium by discharging an ink only on a required image area, the ink can be used efficiently and the running cost is low. Furthermore, there is little noise and it is excellent as an image recording system.

An ink composition that can be cured by exposure to radiation such as ultraviolet rays and, in particular, an inkjet recording ink (radiation curing type inkjet recording ink) are required to have sufficiently high sensitivity and provide a high image quality.

By achieving a high sensitivity, since this imparts high curability upon exposure to actinic radiation, there is a reduction in power consumption and a longer lifetime of an actinic radiation generator due to a low load thereon, etc., and by achieving sufficient curing there are various advantages such as suppression of evaporation of uncured low molecular weight material and suppression of degradation in the strength of an image that is formed. Furthermore, an improvement in the strength in an image due to high sensitivity gives a long plate life for an image area when this ink composition is used for formation of an image area of a lithographic printing plate.

Such an inkjet system of a type that is cured by radiation such as, for example, ultraviolet rays, generates a relatively low degree of odor and can be applied to recording on a recording medium that does not have quick drying properties or ink absorbing properties; the system has therefore attracted attention in recent years.

In order to improve the adhesion to the recording medium, cationically polymerizable ink compositions having a low shrinkage ratio during ultraviolet curing have been proposed (ref., for example, JP-A-H9-183928). However, these cationically polymerizable inks do not have sufficient storage stability due to a reaction involving an acid generated over time, and this is a big barrier to their actual application. Because of this, as an attempt to improve the storage stability, there has been proposed a technique in which a basic compound or an agent that generates a base on heating is added (ref., for example, JP-A-2003-312121, JP-A-2003-341217, and JP-A-2004-91558), but it has been found that there is the new problem that, since the basic compound inhibits the function of an acid generated on exposure to light, the curing sensitivity of the ink is degraded. Because of this, there has been a desire for the achievement of storage stability and high sensitivity at the same time.
(Patent Publication 1) JP-A-H09-183928; JP-A denotes a Japanese unexamined patent publication application
(Patent Publication 2) JP-A-2003-312121; JP-A denotes a Japanese unexamined patent publication application
(Patent Publication 3) JP-A-2003-341217; JP-A denotes a Japanese unexamined patent publication application
(Patent Publication 4) JP-A-2004-91558; JP-A denotes a Japanese unexamined patent publication application

It is an object of the present invention to provide a mixture for which the storage stability for an ink composition is excellent. It is another object of the present invention to provide a method for storing an ink composition so as to give excellent storage stability. It is yet another object of the present invention to provide an ink container giving excellent storage stability for an ink composition, and an image formation method using the ink composition.

The above-mentioned objects have been accomplished by (1) and (5) to (7). They are described below together with (2) to (4), which are preferred embodiments.
(1) A mixture comprising an ink composition and a basic solid compound,
(2) the mixture according to (1), wherein the ink composition comprises a cationically polymerizable compound and a photo-acid generator,
(3) the mixture according to (1) or (2), wherein the basic solid compound is insoluble or sparingly soluble in the ink composition,
(4) the mixture according to any one of (1) to (3), wherein the basic solid compound is in the form of beads having an average particle size of 0.05 to 5 mm,
(5) a method for storing an ink composition, the method comprising contacting the ink composition with a basic solid compound,
(6) an ink container housing an ink composition and a basic solid compound, and
(7) a method for forming an image, the method comprising a step of recording an image on a recording medium using the ink composition in the mixture according to any one of (1) to (4) and a step of irradiating the recorded image with actinic radiation so as to carry out curing.

The mixture of the present invention comprises an ink composition and a basic solid compound.

Due to the presence of a basic solid compound in the mixture of the present invention, the storage stability of an ink composition whose viscosity, etc. becomes unstable due to an acid material, which might be generated during storage, is improved as a result of a neutralization reaction with the basic solid compound, and the continuous discharge reliability during image formation is also improved.

The present invention is explained in detail below.

### (1) Basic solid compound

The mixture of the present invention comprises an ink composition and a basic solid compound.

Any basic solid compound may be used as long as it is a solid compound having the function of neutralizing an acid, and both an inorganic basic solid compound and an organic basic solid compound may be used.

It is preferable for the basic solid compound to be insoluble or sparingly soluble in the ink composition at room temperature and, specifically, the solubility at 25°C in 100 g of the ink composition is preferably 1 g or less, more preferably 0.5 g or less, and yet more preferably 0.2 g or less.

In the present invention, by adding a basic solid compound to an ink composition, the basic solid compound can neutralize an acid generated during storage, thus improving the storage stability of the ink composition. On the other hand, since the basic solid compound is insoluble in the ink composition, when using the ink composition, the basic solid compound can easily be removed from the mixture. The basic solid compound therefore does not interfere with the curability of the ink composition after discharge.

In a conventional method in which a basic compound is added to an ink composition, since the basic compound is present in the ink composition while curing discharged ink, there is the problem that the curability of the ink composition deteriorates. The mixture of the present invention improves the storage stability of the ink composition as well as giving good curability as an ink composition, thus enabling a balance between the storage stability and the curability to be achieved.

As the inorganic basic solid compound, there can be cited various types of inorganic salts (a carbonate, a phosphate, a carboxylate, etc.), a metal oxide, a metal sulfide, a metal nitride, etc. and those obtained by treating the surface of these inorganic solids with a base. Specific examples thereof include calcium carbonate, barium carbonate, magnesium carbonate, strontium carbonate, sodium carbonate, potassium carbonate, cesium carbonate, sodium hydrogen carbonate, potassium hydrogen carbonate, calcium hydrogen carbonate, magnesium hydrogen carbonate, zinc carbonate, calcium phosphate, magnesium phosphate, sodium phosphate, potassium phosphate, barium phosphate, sodium citrate, potassium citrate, calcium citrate, magnesium citrate, magnesium oxalate, sodium oxalate, potassium oxalate, sodium tartarate, potassium tartarate, basic glass beads, alumina (active alumina), zeolite, basic titanium oxide, basic zinc oxide, basic silica gel, basic tin oxide, basic zirconium oxide, basic titanium nitride, and basic zinc sulfide. Furthermore, in the present invention, as the basic solid compound, basic glass beads that are obtained by treating glass beads with, for example, a silane coupling agent so as to make them basic may also be used. However, the present invention is not limited to these examples. These basic solid compounds may be used in any form, but as described later they are preferably used in the form of beads.

Examples of the organic basic solid compound include a polymer synthesized by polymerizing a monomer having a basic functional group (e.g. an organic amino group, a nitrogen atom-containing heterocyclic group, a weak acid/strong base salt functional group, etc.), beads obtained by coupling a basic functional group-containing compound to the surface of organic polymer beads, and beads obtained by coating the polymer beads with the above-mentioned polymer. However, the present invention is not limited to these examples either.

The organic basic solid compounds may be synthesized by various types of methods, and commercial organic basic solid compounds may also be used. Specific examples thereof include Amberlite (manufactured by Organo Corporation), which is an anion-exchange resin.

In the present invention, as the basic solid compound, from the viewpoint of ease of imparting basic properties by surface treatment, regenerability by surface treatment, sufficient surface area, high safety, availability, and ease of handling, it is preferable to use calcium carbonate, barium carbonate, magnesium carbonate, sodium hydrogen carbonate, potassium hydrogen carbonate, calcium hydrogen carbonate, magnesium hydrogen carbonate, basic glass beads, alumina (active alumina), zeolite, basic titanium oxide, basic zinc oxide, basic silica gel, a polymer synthesized by polymerizing a monomer having a basic functional group (e.g. an organic amino group, a nitrogen atom-containing heterocyclic group, a weak acid/strong base salt functional group, etc.), beads obtained by coupling a basic functional group-containing compound to the surface of organic polymer beads, and beads obtained by coating the polymer beads with the above-mentioned polymer. It is more preferable to use calcium carbonate, magnesium carbonate, sodium hydrogen carbonate, calcium hydrogen carbonate, magnesium hydrogen carbonate, basic glass beads, alumina (active alumina), zeolite, basic titanium oxide, basic silica gel, a polymer synthesized by polymerizing a monomer having a basic functional group (e.g. an organic amino group, a nitrogen atom-containing heterocyclic group, a weak acid/strong base salt functional group, etc.), beads obtained by coupling a basic functional group-containing compound to the surface of organic polymer beads, and beads obtained by coating the polymer beads with the above-mentioned polymer, and it is yet more preferable to use calcium carbonate, magnesium carbonate, sodium hydrogen carbonate, basic glass beads, alumina (active alumina), zeolite, basic silica gel, a polymer synthesized by polymerizing a monomer having a basic functional group (e.g. an organic amino group, a nitrogen atom-containing heterocyclic group, a weak acid/strong base salt functional group, etc.), beads obtained by coupling a basic functional group-containing compound to the surface of organic polymer beads, and beads obtained by coating the polymer beads with the above-mentioned polymer.

The amount of basic solid compound added may be selected as appropriate as long as the storage stability of the ink composition can be maintained. If the amount of basic solid compound added is too large, the amount of ink composition in the mixture decreases as a consequence thereof, and it might increase the cost.

The amount of basic solid compound added is therefore preferably 0.1 to 80 wt % relative to the total amount of mixture in which the ink composition and the basic solid compound are combined, more preferably 0.5 to 60 wt %, and yet more preferably 2 to 50 wt %.

It is preferable for the amount of basic solid compound added to be at least 0.1 wt % since neutralization of an acid is carried out sufficiently. Furthermore, it is preferable for the amount added to be no greater than 80 wt % since the amount of basic solid compound in the mixture is appropriate, and the amount of ink composition relative to the entire mixture is appropriate.

When two or more types of basic solid compounds are used, it is preferable to add them so that the total amount thereof is in the above-mentioned range.

The basic solid compound is preferably in the form of beads. The term 'beads' referred to in the present invention includes not only simple spheres but also distorted particles and irregular forms such as crushed ceramic pieces.

Among them, the basic solid compound is preferably in the form of beads having an average particle size of 0.05 to 5 mm, and more preferably in the form of beads having an average particle size of 0.07 to 4 mm.

It is preferable for the average particle size to be in the above-mentioned range since the basic solid compound can easily be removed from the mixture when using the ink composition.

The above-mentioned average particle size means a number-average particle size, and may be determined as an average value by actually measuring 100 particles using an optical microscope.

In the present invention, the basic solid compound is preferably in the form of particles (bead form), but it may also be plate-, cuboid-, cube-, etc. shaped.

In the present invention, the basic solid compound may be used singly, but it is also preferable to use two or more types of basic solid compounds in combination. It is also preferable to use an inorganic basic solid compound and an organic basic solid compound in combination.

### (2) Ink composition

In the present invention, the ink composition (hereinafter, also called simply an 'ink') can be cured by radiation or heat, comprises (A) a polymerizable compound and (B) a polymerization initiator, and comprises as necessary (C) a colorant, (D) a sensitizing dye, (E) a cosensitizer, and (F) another component.

The 'radiation' referred to in the present invention is not particularly limited as long as it is actinic radiation that can provide energy allowing an initiator species to be generated in an ink composition by the radiation, and broadly includes α rays, y rays, X rays, ultraviolet rays(UV), visible rays, and electron beams and, among these, ultraviolet rays and electron beams are preferable from the viewpoint of curing sensitivity and the availability of equipment, and ultraviolet rays are particularly preferable. With regard to the ink composition for use in the present invention, an ink composition that can be cured when exposed to ultraviolet rays as radiation is therefore preferable.

### (2-1) Components contained in ink composition

### (A) Polymerizable compound

The ink composition of the present invention comprises (A) a polymerizable compound. Examples of the polymerizable compound that can be used in the present invention include a radically polymerizable compound and a cationically polymerizable compound. As the radically polymerizable compound, photocuring materials employing photopolymerizable compositions described in, for example, JP-A-7-159983, JP-B-7-31399 (JP-B denotes a Japanese examined patent application publication), JP-A-8-224982, JP-A-10-863, and JP-A-9-80675 are known, and as the cationically polymerizable compound, for example, a cationically polymerizable type photocuring resin is known; in recent years, cationically photopolymerizable type photocuring resins sensitized to a visible light wavelength region of 400 nm or longer have been disclosed in, for example, JP-A-6-43633 and JP-A-8-324137.

### (a) Cationically polymerizable compound

The cationically polymerizable compound (a) used in the present invention is not particularly limited as long as it is a compound that undergoes a polymerization reaction by virtue of an acid generated by the compound (b) that generates acid when exposed to radiation, which will be described later, and is cured, and various types of cationically polymerizable monomers known as photo-cationically polymerizable monomers may be used. Examples of the cationically polymerizable monomer include epoxy compounds, vinyl ether compounds, oxetane compounds described in JP-A-6-9714, JP-A-2001-31892, JP-A-2001-40068, JP-A-2001-55507, JP-A-2001-310938, JP-A-2001-310937, JP-A-2001-220526, etc.

Examples of the epoxy compounds include aromatic epoxides, alicyclic epoxides, and aliphatic epoxides.

Examples of the aromatic epoxide include di- or polyglycidyl ethers produced by a reaction between epichlorohydrin and a polyhydric phenol having at least one aromatic nucleus or an alkylene oxide adduct thereof; specific examples include di- or polyglycidyl ethers of bisphenol A or an alkylene oxide adduct thereof, di- or polyglycidyl ethers of hydrogenated bisphenol A or an alkylene oxide adduct thereof, and novolac type epoxy resins. Examples of the alkylene oxide above include ethylene oxide and propylene oxide.

Examples of the alicyclic epoxides include cyclohexene oxide- and cyclopentene oxide-containing compounds obtained by epoxidizing a compound having at least one cycloalkene ring such as a cyclohexene ring or a cyclopentene ring with an appropriate oxidizing agent such as hydrogen peroxide or a peracid.

Examples of the aliphatic epoxides include di- or polyglycidyl ethers of an aliphatic polyhydric alcohol or an alkylene oxide adduct thereof, and representative examples thereof include diglycidyl ethers of an alkylene glycol such as the diglycidyl ether of ethylene glycol, the diglycidyl ether of propylene glycol, and the diglycidyl ether of 1,6-hexanediol, polyglycidyl ethers of a polyhydric alcohol such as the di- or triglycidyl ether of glycerol or an alkylene oxide adduct thereof, and diglycidyl ethers of a polyalkylene glycol such as the diglycidyl ether of polyethylene glycol or an alkylene oxide adduct thereof and the diglycidyl ether of polypropylene glycol or an alkylene oxide adduct thereof. Examples of the alkylene oxide above include ethylene oxide and propylene oxide.

Detailed examples of monofunctional and polyfunctional epoxy compounds that can be used in the present invention are now given.

Examples of monofunctional epoxy compounds used in the present invention include phenyl glycidyl ether, *p-tert*-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and 4-vinylcyclehexene oxide.

Furthermore, examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexenylmethyl-3',4'-epoxycyclohexenecarboxylate, 2-(3,4-epoxycyclohexyl-5,5-spiro-3,4-epoxy)cyclohexane-meta-dioxane, bis(3,4-epoxycyclohexylmethyl) adipate, bis(3,4-epoxy-6-methylcyclohexylmethyl) adipate, 3,4-epoxy-6-methylcyclohexenyl 3',4'-epoxy-6'-methylcyclohexenecarboxylate, methylenebis(3,4-epoxycyclohexane), dicyclopentadiene diepoxide, the di(3,4-epoxycyclohexylmethyl) ether of ethylene glycol, ethylene bis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

Examples of the vinyl ether compounds include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl vinyl ether-O-propylene carbonate, dodecyl vinyl ether, and diethylene glycol monovinyl ether.

Detailed examples of monofunctional vinyl ethers and polyfunctional vinyl ethers are given below.

Specific examples of monofunctional vinyl ethers include methyl vinyl ether, ethyl vinyl ether, propyl vinyl ether, *n*-butyl vinyl ether, *t*-butyl vinyl ether, 2-ethylhexyl vinyl ether, *n*-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol : vinyl ether, chloroethyl vinyl ether, chlorobutyl vinyl ether, chloroethoxyethyl vinyl ether, phenylethyl vinyl ether, and phenoxypolyethylene glycol vinyl ether.

Furthermore, examples of polyfunctional vinyl ethers include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ether, and bisphenol F alkylene oxide divinyl ether; and polyfunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, an ethylene oxide adduct of trimethylolpropane trivinyl ether, a propylene oxide adduct of trimethylolpropane trivinyl ether, an ethylene oxide adduct of ditrimethylolpropane tetravinyl ether, a propylene oxide adduct of ditrimethylolpropane tetravinyl ether, an ethylene oxide adduct of pentaerythritol tetravinyl ether, a propylene oxide adduct of pentaerythritol tetravinyl ether, an ethylene oxide adduct of dipentaerythritol hexavinyl ether, and a propylene oxide adduct of dipentaerythritol hexavinyl ether.

As the vinyl ether compound, the di- or tri-vinyl ether compounds are preferable from the viewpoint of curability, adhesion to a recording medium, surface hardness of the image formed, etc., and the divinyl ether compounds are particularly preferable.

The oxetane compound in the present invention means a compound having at least one oxetane ring, and may be selected freely from known oxetane compounds such as those described in JP-A-2001-220526, JP-A-2001-310937, and JP-A-2003-341217.

As the compound having an oxetane ring that can be used in the ink composition of the present invention, a compound having 1 to 4 oxetane rings in the structure is preferable. In accordance with use of such a compound, it becomes easy to maintain the viscosity of the ink composition in a range that gives good handling properties and, furthermore, the cured ink can be given high adhesion to the recording medium, which is preferable.

Examples of compounds having 1 to 2 oxetane rings in the molecule include compounds represented by Formulae (1) to (3) below.

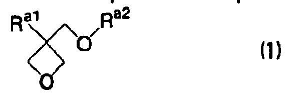

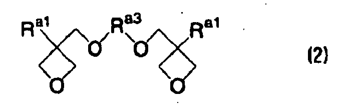

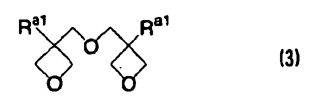

R^{a1} denotes a hydrogen atom, an alkyl group having 1 to 6 carbons, a fluoroalkyl group having 1 to 6 carbons, an allyl group, an aryl group, a furyl group, or a thienyl group. When there are two R^{a1} in the molecule, they may be identical to or different from each other.

Examples of the alkyl group include a methyl group, an ethyl group, a propyl group, and a butyl group, and preferred examples of the fluoroalkyl group include those obtained by substituting any of the hydrogen atoms of the above alkyl groups with a fluorine atom.

R^{a2} denotes a hydrogen atom, an alkyl group having 1 to 6 carbons, an alkenyl group having 2 to 6 carbons, a group having an aromatic ring, an alkylcarbonyl group having 2 to 6 carbons, an alkoxycarbonyl group having 2 to 6 carbons, or an N-alkylcarbamoyl group having 2 to 6 carbons. Examples of the alkyl group include a methyl group, an ethyl group, a propyl group, and a butyl group, examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group, and examples of the group having an aromatic ring include a phenyl group, a benzyl group, a fluorobenzyl group, a methoxybenzyl group, and a phenoxyethyl group. Examples of the alkylcarbonyl group include an ethyl carbonyl group, a propylcarbonyl group. and a butylcarbonyl group, examples of the alkoxycarbonyl group include an ethoxycarbonyl group, a propoxycarbonyl group, and a butoxycarbonyl group, and examples of the N-alkylcarbamoyl group include an ethylcarbamoyl group, a propylcarbamoyl group, a butylcarbamoyl group, and a pentylcarbamoyl group. Furthermore, it is possible for R^{a2} to have a subsituent, and the examples of the substituent include alkyl group, having 1 to 6 carbons and fluorine atom.

R^{a3} denotes a linear or branched alkylene group, a linear or branched poly(alkyleneoxy) group, a linear or branched unsaturated hydrocarbon group, a carbonyl group, a carbonyl group-containing alkylene group, a carboxyl group-containing alkylene group, a carbamoyl group-containing alkylene group, or a group shown below. Examples of the alkylene group include an ethylene group, a propylene group, and a butylene group, and examples of the poly(alkyleneoxy) group include a poly(ethyleneoxy) group and a poly(propyleneoxy) group. Examples of the unsaturated hydrocarbon group include a propenylene group, a methylpropenylene group, and a butenylene group.

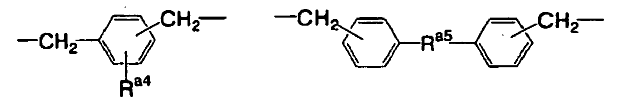

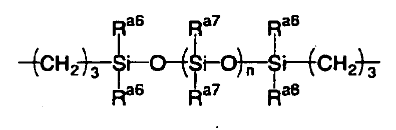

When R^{a3} is the above-mentioned polyvalent group, R^{a4} denotes a hydrogen atom, an alkyl group having 1 to 4 carbons, an alkoxy group having 1 to 4 carbons, a halogen atom, a nitro group, a cyano group, a mercapto group, a lower alkylcarboxyl group, a carboxyl group, or a carbamoyl group.

R^{a5} denotes an oxygen atom, a sulfur atom, a methylene group, NH, SO, SO₂, C(CF₃)₂, or, C(CH₃)₂.

R^{a6} denotes an alkyl group having 1 to 4 carbons or an aryl group, and n is an integer of 0 to 2,000. R^{a7} denotes an alkyl group having 1 to 4 carbons, an aryl group, or a monovalent group having the structure below. In the formula, R^{a8} denotes an alkyl group having 1 to 4 carbons or an aryl group, and m is an integer of 0 to 100.

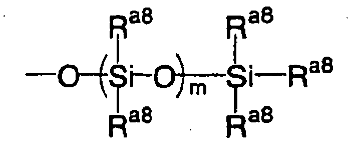

Examples of the compound represented by Formula (1) include 3-ethyl-3-hydroxymethyloxetane (OXT-101: manufactured by Toagosei Co., Ltd.), 3-ethyl-3-(2-ethylhexyloxymethyl)oxetane (OXT-212: manufactured by Toagosei Co., Ltd.), and 3-ethyl-3-phenoxymethyloxetane (OXT-211: manufactured by Toagosei Co., Ltd.). Examples of the compound represented by Formula (2) include 1,4-bis[(3-ethyl-3-oxetanylmethoxy)methyl]benzene (OXT-121: Toagosei Co., Ltd.). Examples of the compound represented by Formula (3) include bis(3-ethyl-3-oxetanylmethyl) ether (OXT-221: Toagosei Co., Ltd.).

Examples of the compound having 3 to 4 oxetane rings in the molecule include compounds represented by Formula (4) below.

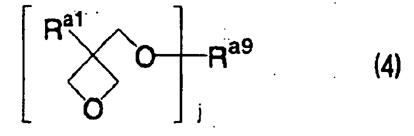

In Formula (4), R^{a1} denotes the same as in Formula (1) above. Furthermore, examples of R^{a9}, which is a polyvalent linking group, include a branched alkylene group having 1 to 12 carbons such as a group represented by A to C below, a branched poly(alkyleneoxy) group such as a group represented by D below, and a branched polysiloxane group such as a group represented by E below. j is 3 or 4.

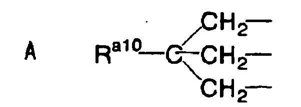

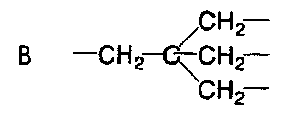

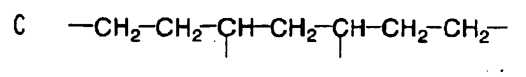

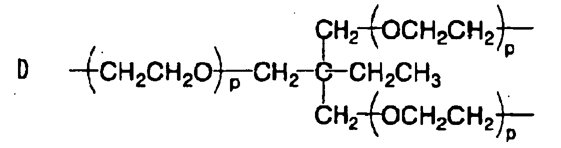

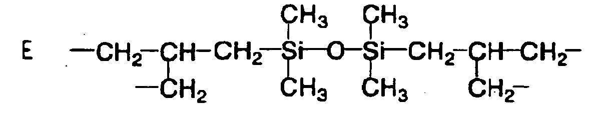

In the above A, R^{a10} denotes a methyl group, an ethyl group, or a propyl group. Furthermore, in the above D, p is an integer of 1 to 10.

Moreover, as another embodiment of the oxetane compound that can be suitably used in the present invention, a compound having an oxetane ring on a side chain, represented by Formula (5) below, can be cited.

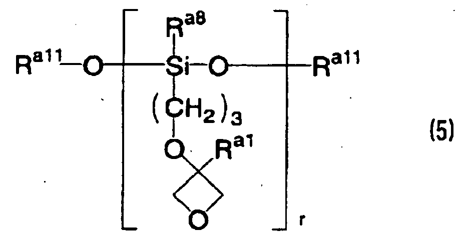

In Formula (5), R^{a1} and R^{a8} denote the same as in the above-mentioned formulae. R^{a11} is an alkyl group having 1 to 4 carbons such as a methyl group, an ethyl group, a propyl group, or a butyl group, or a trialkylsilyl group, and r is 1 to 4.

Such compounds having an oxetane ring are described in detail in paragraph Nos. (0021) to (0084) of JP-A-2003-341217 above, and the compounds described here may be suitably used in the present invention.

The oxetane compounds described in JP-A-2004-91556 can be used in the present invention. The details are described in paragraph Nos. (0022) to (0058).

Among the oxetane compounds used in the present invention, from the viewpoint of ink composition viscosity and tackiness, it is preferable to use a compound having one oxetane ring.

The ink composition for use in the present invention may comprise only one type of cationically polymerizable compound or two or more types thereof in combination, but from the viewpoint of suppressing effectively shrinkage during ink curing, it is preferable to use a combination of a vinyl ether compound and at least one type of compound selected from the oxetane compounds and the epoxy compounds.

The content of the cationically polymerizable compound in the ink composition is suitably in the range of 10 to 95 wt % relative to the total solids content of the composition, preferably 30 to 90 wt %, and more preferably 50 to 85 wt %.

### Radically polymerizable compound

The radically polymerizable compound is a compound having a radically polymerizable ethylenically unsaturated bond, and may be any compound as long as it has at least one radically polymerizable ethylenically unsaturated bond in the molecule; examples thereof include those having a chemical configuration such as a monomer, an oligomer, or a polymer. One type of radically polymerizable compound may be used, or two or more types thereof may be used in combination in order to improve an intended property. It is more preferable to use a polyfunctional compound having two or more functional groups than it is to use a monofunctional compound. It is yet more preferable to use two or more types of polyfunctional compounds in combination in terms of controlling aspects of performance such as reactivity or physical properties.

Examples of the polymerizable compound having a radically polymerizable ethylenically unsaturated bond include unsaturated carboxylic acids such as acrylic acid, methacrylic acid, itaconic acid, crotonoic acid, isocrotonoic acid, and maleic acid, and salts thereof, anhydrides having an ethylenically unsaturated group, acrylonitrile, styrene, and various types of radically polymerizable compounds such as unsaturated polyesters, unsaturated polyethers, unsaturated polyamides, and unsaturated urethanes.

Specific examples thereof include acrylic acid derivatives such as 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, *N*-methylol acrylamide, diacetone acrylamide, and epoxyacrylate; methacrylic derivatives such as methyl methacrylate, *n*-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, and 2,2-bis(4-methacryloxypolyethoxyphenyl)propane; and allyl compound derivatives such as allyl glycidyl ether, diallyl phthalate, and triallyl trimellitate. More specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku' (UV·EB Curing Handbook (Starting Materials) Ed. K. Kato (Kobunshi Kankoukai, 1985); 'UV·EB Koka Gijutsu no Oyo to Shijyo' (Application and Market of UV·EB Curing Technology', p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) can be used.

It is preferable to use the radically polymerizable compound and the cationically polymerizable compound in combination since, due to high sensitivity characteristic of radical polymerization and low volume shrinkage characteristic of cationic polymerization, a printed material or a lithographic printing plate having both high sensitivity and adhesion is obtained.

### Preferred polymerizable compound

In the present invention it is preferable to use at least one type of cationically polymerizable compound as the polymerizable compound. Since the cationically polymerizable compound is easily cured by an acid, curing of the ink composition during storage can be suppressed effectively by the basic solid compound neutralizing the acid, thus enhancing the storage stability effectively.

Furthermore, in the present invention, it is also preferable to use a cationically polymerizable compound and a radically polymerizable compound in combination.

### (B) Polymerization initiator

In the present invention the ink composition preferably comprises (B) a polymerization initiator. As the polymerization initiator that can be used in the present invention, a known radical polymerization initiator or cationic polymerization initiator may be used. The polymerization initiators may be used singly or in a combination of two or more types.

The radical polymerization initiator or the cationic polymerization initiator that can be used in the ink composition for use in the present invention is a compound that forms a polymerization initiating species by absorbing external energy. The external energy used for initiating polymerization is roughly divided into heat and actinic radiation, and a thermal polymerization initiator and a photopolymerization initiator are used respectively. Examples of the actinic radiation include gamma rays, beta rays, an electron beam, UV rays, visible light, and IR rays.

In the present invention, when a cationically polymerizable compound is used as the polymerizable compound, it is preferable to use a cationic polymerization initiator, and when a radically polymerizable compound is used as the polymerizable compound, it is preferable to use a radical polymerization initiator.

Furthermore, in the present invention, it is particularly preferable to use a cationically polymerizable compound as the polymerizable compound (A) and a photo-acid generator (cationic polymerization initiator) as the polymerization initiator (B).

### Cationic polymerization initiator

As the cationic polymerization initiator (photo-acid generator) that can be used in the present invention, for example, compounds that are used for chemically amplified photoresists or cationic photopolymerization are preferably cited (ref. `Imejingu you Yukizairyou' (Organic Materials for Imaging) Ed. The Japanese Research Association for Organic Electronics Materials, Bunshin Publishing Co. (1993), pp. 187-192). Examples of the cationic polymerization initiator suitably used in the present invention are listed below.

Firstly, B(C₆F₅)₄⁻, PF₆⁻, AsF₆⁻, SbF₆⁻, and CF₃SO₃⁻ salts of aromatic onium compounds such as diazonium, ammonium, iodonium, sulfonium, and phosphonium can be cited. Secondly, sulfonates that generate a sulfonic acid can be cited. Thirdly, halides that photogenerate a hydrogen halide can also be used. Fourthly, iron allene complexes can be cited.

### Radical polymerization initiator

Preferred examples of the radical polymerization initiator that can be used in the present invention include (a) aromatic ketones, (b) aromatic onium salt compounds, (c) organic peroxides, (d) thio compounds, (e) hexaarylbiimidazole compounds, (f) ketoxime ester compounds, (g) borate compounds, (h) azinium compounds, (i) metallocene compounds, (j) active ester compounds, (k) compounds having a carbon-halogen bond, and (I) alkylamine compounds. These radical polymerization initiators may be used singly or in a combination of the above-mentioned compounds (a) to (I). The radical polymerization initiators of the present invention are suitably used singly or in a combination of two or more types.

### (C) Colorant

In the present invention, the ink composition comprises (C) a colorant (a coloring agent).

The colorant that can be used in the present invention is not particularly limited, but a pigment and an oil-soluble dye that have excellent weather resistance and rich color reproduction are preferable, and it may be selected from any known colorant such as a soluble dye. It is preferable that the colorant that can be suitably used in the ink composition or the inkjet recording ink composition of the present invention does not function as a polymerization inhibitor in a polymerization reaction, which is a curing reaction. This is because the sensitivity of the curing reaction by actinic radiation should not be degraded.

### Pigment

The pigment is not particularly limited, and it is possible to use any generally commercially available organic pigment or inorganic pigment, a dispersion of a pigment in an insoluble resin, etc. as a dispersion medium, a pigment on the surface of which a resin has been grafted, etc. It is also possible to use resin particles colored with a dye, etc.

Examples of these pigments include pigments described in 'Ganryo no Jiten' (Dictionary of Pigments) Ed. by Seijirou Ito (2000), W. Herbst, K. Hunger 'Industrial Organic Pigments', JP-A-2002-12607, JP-A-2002-188025, JP-A-2003-26978, and JP-A-2003-342503.

Specific examples of the organic pigment and the inorganic pigment that can be used in the present invention include, as those exhibiting a yellow color, monoazo pigments such as Cl Pigment Yellow 1 (Fast Yellow G, etc.) and Cl Pigment Yellow 74, disazo pigments such as Cl Pigment Yellow 12 (Disazo Yellow AAA, etc.) and Cl Pigment Yellow 17, benzidine-free azo pigments such as Cl Pigment Yellow 180, azo lake pigments such as Cl Pigment Yellow 100 (Tartrazine Yellow Lake, etc.), condensed azo pigments such as Cl Pigment Yellow 95 (Azo Condensation Yellow GR, etc.), acidic dye lake pigments such as CI Pigment Yellow 115 (Quinoline Yellow Lake, etc.), basic dye lake pigments such as CI Pigment Yellow 18 (Thioflavine Lake, etc.), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as Cl Pigment Yellow 153 (Nickel Nitroso Yellow, etc.), and metal complex azomethine pigments such as Cl Pigment Yellow 117 (Copper Azomethine Yellow, etc.).

Examples of pigments exhibiting a red or magenta color include monoazo pigments such as Cl Pigment Red 3 (Toluidine Red, etc.), disazo pigments such as Cl Pigment Red 38 (Pyrazolone Red B, etc.), azo lake pigments such as Cl Pigment Red 53:1 (Lake Red C, etc.) and Cl Pigment Red 57:1 (Brilliant Carmine 6B), condensed azo pigments such as Cl Pigment Red 144 (Azo Condensation Red BR, etc.), acidic dye lake pigments such as Cl Pigment Red 174 (Phloxine B Lake, etc.), basic dye lake pigments such as Cl Pigment Red 81 (Rhodamine 6G' Lake, etc.), anthraquinone pigments such as Cl Pigment Red 177 (Dianthraquinonyl Red, etc.), thioindigo pigments such as Cl Pigment Red 88 (Thioindigo Bordeaux, etc.), perinone pigments such as Cl Pigment Red 194 (Perinone Red, etc.), perylene pigments such as Cl Pigment Red 149 (Perylene Scarlet, etc.), quinacridone pigments such as Cl Pigment violet 19 (unsubstituted quinachridone) and Cl Pigment Red 122 (Quinacridone Magenta, etc.), isoindolinone pigments such as Cl Pigment Red 180 (Isoindolinone Red 2BLT, etc.), and alizarin lake pigments such as Cl Pigment Red 83 (Madder Lake, etc.).

Examples of pigments exhibiting a blue or cyan color include disazo pigments such as Cl Pigment Blue 25 (Dianisidine Blue, etc.), phthalocyanine pigments such as Cl Pigment Blue 15 (Phthalocyanine Blue, etc.), acidic dye lake pigments such as Cl Pigment Blue 24 (Peacock Blue Lake, etc.), basic dye lake pigments such as Cl Pigment Blue 1 (Victoria Pure Blue BO Lake, etc.), anthraquinone pigments such as Cl Pigment Blue 60 (Indanthrone Blue, etc.), and alkali blue pigments such as Cl Pigment Blue 18 (Alkali Blue V-5:1).

Examples of pigments exhibiting a green color include phthalocyanine pigments such as Cl Pigment Green 7 (Phthalocyanine Green) and Cl Pigment Green 36 (Phthalocyanine Green), and azo metal complex pigments such as Cl Pigment Green 8 (Nitroso Green).

Examples of pigments exhibiting an orange color include isoindoline pigments such as Cl Pigment Orange 66 (Isoindoline Orange) and anthraquinone pigments such as Cl Pigment Orange 51 (Dichloropyranthrone. Orange).

Examples of pigments exhibiting a black color include carbon black, titanium black, and aniline black.

Specific examples of white pigments that can be used include basic lead carbonate (2PbCO₃Pb(OH)₂, also known as silver white), zinc oxide (ZnO, also known as zinc white), titanium oxide (TiO₂, also known as titanium white), and strontium titanate (SrTiO₃, also known as titan strontium white).

Titanium oxide has, compared with other white pigments, a low specific gravity, a high refractive index, and is chemically and physically stable, and therefore has high hiding power and coloring power as a pigment and, furthermore, has excellent durability toward acids, alkalis, and other environments. It is therefore preferable to use titanium oxide as the white pigment. It is of course possible to use another white pigment (which can be any white pigment, in addition to the white pigments cited above) as necessary.

For dispersion of the pigment, for example, a dispersing machine such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet type jet mill may be used.

When carrying out dispersion of the pigment, a dispersant may be added. Examples of the dispersant include hydroxyl group-containing carboxylic acid esters, salts of a long-chain polyaminoamide and a high molecular weight acid ester, high molecular weight polycarboxylic acid salts, high molecular weight unsaturated acid esters, high molecular weight copolymers, modified polyacrylates, aliphatic polycarboxylic acids, naphthalenesulfonic acid formaldehyde condensates, polyoxyethylene alkylphosphate esters, and pigment derivatives. It is also preferable to use a commercial polymeric dispersant such as the Solsperse series manufactured by Zeneca.

Furthermore, as a dispersion adjuvant, it is also possible to use a synergist, depending on the various types of pigment. The dispersant and dispersion adjuvant are preferably used at 1 to 50 parts by weight relative to 100 parts by weight of the pigment.

In the ink composition, as a dispersing medium for various components such as the pigment, a solvent may be added, or the cationically polymerizable compound, which is a low molecular weight compound, may be used as a dispersing medium without using a solvent, and since the ink composition used in the present invention is preferably a radiation curing type ink, and after the ink is applied on top of a recording medium it is cured, it is preferable not to use a solvent. This is because, if a solvent remains in the cured ink image, the solvent resistance is degraded and the VOC (Volatile Organic Compound) problem of the residual solvent occurs. From this viewpoint, it is preferable to use as a dispersing medium the cationically polymerizable compound and, in particular, it is preferable to select a cationically polymerizable monomer having the lowest viscosity in terms of improvement of dispersion suitability and handling properties of the ink composition.

It is preferable for the average particle size of the pigment to be in the range of 0.02 to 0.4 µm, more preferably 0.02 to 0.1 µm, and yet more preferably, 0.02 to 0.07 µm.

In order to make the average particle size of the pigment particles be in the above-mentioned range, the pigment, the dispersant, and the dispersing medium are selected, and dispersion conditions and filtration conditions are set.

By such control of particle size, clogging of a head nozzle can be suppressed, and the storage stability of ink, the ink transparency, and the curing sensitivity can be maintained.

### Dye

The dye to be used in the present invention is preferably oil-soluble. Specifically, this means that the solubility in water at 25°C (the weight of a dye that can be dissolved in 100 g of water) is equal to or less than 1 g, preferably equal to or less than 0.5 g, and more preferably equal to or less than 0.1 g. Therefore, the so-called oil-soluble dye, which is insoluble in water, is preferably used.

### (D) Sensitizing dye

In the present invention the ink composition may contain a sensitizing dye in order to promote decomposition of the above-mentioned polymerization initiator by absorbing specific actinic radiation, in particular when used for inkjet recording. The sensitizing dye absorbs specific actinic radiation and attains an electronically excited state. The sensitizing dye in the electronically excited state causes actions such as electron transfer, energy transfer, or heat generation upon contact with the polymerization initiator. This causes the polymerization initiator to undergo a chemical change and decompose, thus forming a radical, an acid, or a base.

Preferred examples of the sensitizing dye include those in the categories of compounds below and have an absorption wavelength in the region of 350 nm to 450 nm.

Examples thereof include polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavine, acriflavine), anthraquinones (e.g. anthraquinone), squaryliums (e.g. squarylium), and coumarins (e.g. 7-diethylamino-4-methylcoumarin).

Preferred examples of the sensitizing dye that can be used in the present invention include compounds represented by Formulae (IX) to (XIII) below.

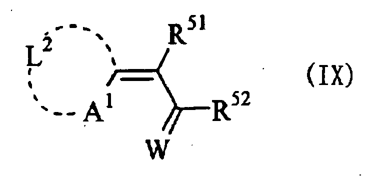

In Formula (XI), A¹ denotes a sulfur atom or NR⁵⁰, and R⁵⁰ denotes an alkyl group or an aryl group. L² denotes a non-metallic atomic group forming a basic nucleus of a dye in cooperation with the adjacent A¹ and adjacent carbon atom. R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

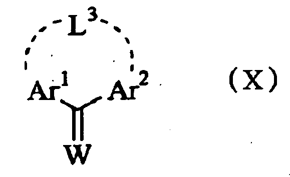

In Formula (X), Ar¹ and Ar² independently denote an aryl group and are connected to each other via bonding with L³. Here, L³ denotes -O- or -S-. W has the same meaning as that shown in Formula (IX).

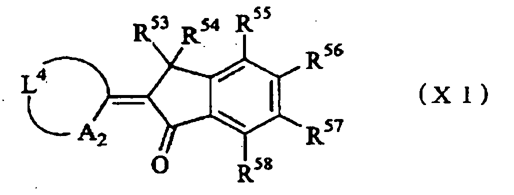

In Formula (XI), A₂ denotes a sulfur atom or NR⁵⁹, L⁴ denotes a non-metallic atomic group forming a basic nucleus of a dye in cooperation with the adjacent A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

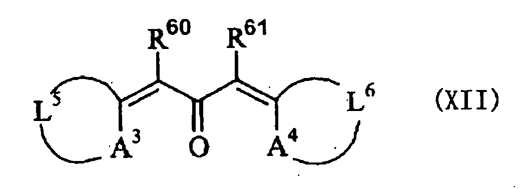

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus of a dye in cooperation with the adjacent A³ and A⁴ and adjacent carbon atom, and R⁶⁰ and R⁶¹ independently denote a hydrogen atom or a monovalent non-metallic atomic group, or are bonded to each other to form an aliphatic or aromatic ring.

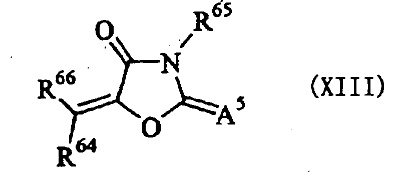

In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Preferred examples of the compounds represented by Formulae (IX) to (XIII) include (E-1) to (E-20) below.

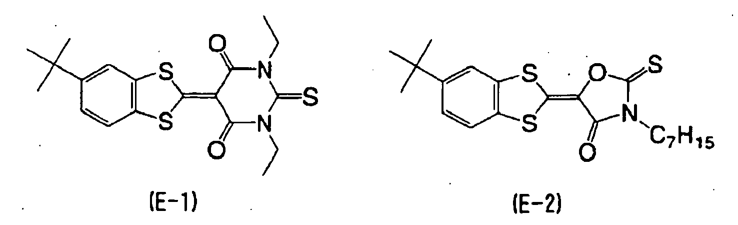

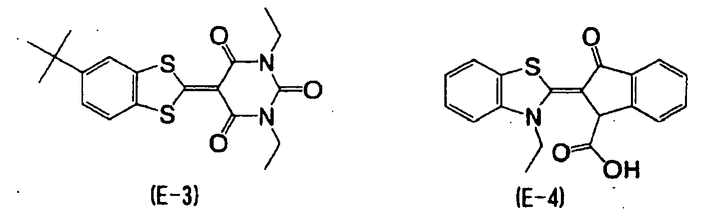

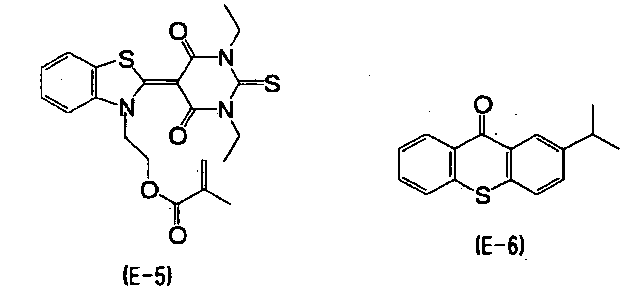

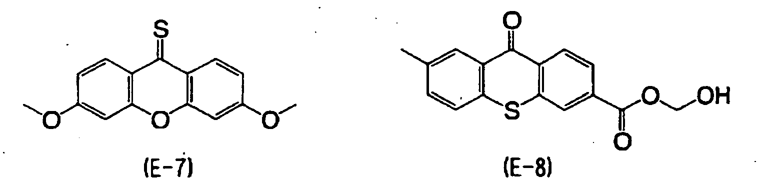

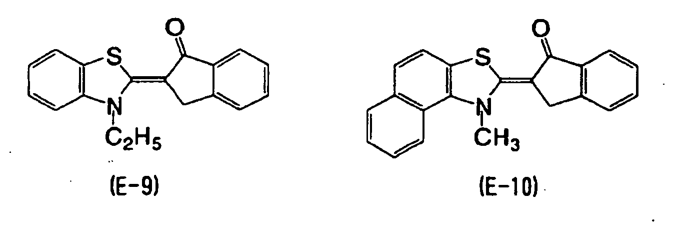

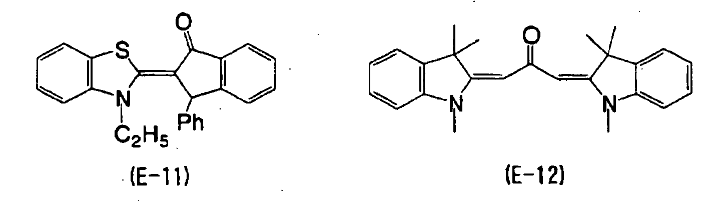

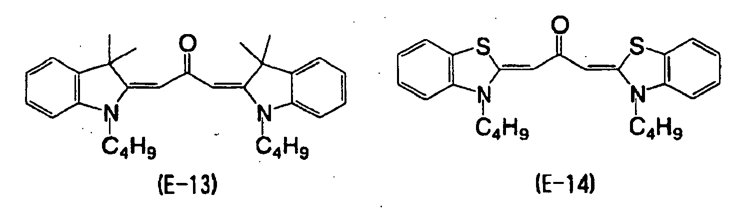

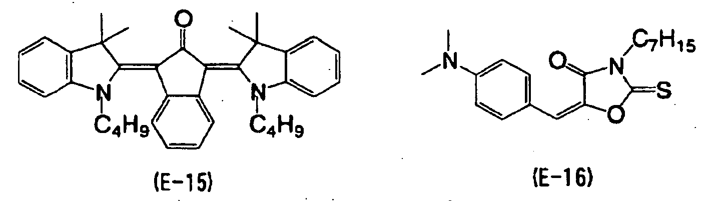

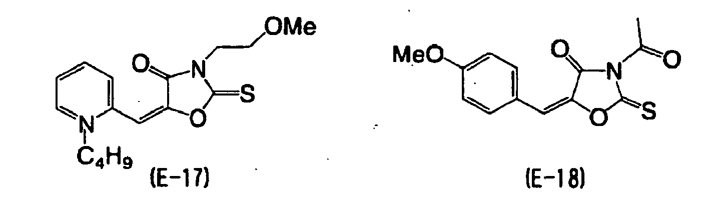

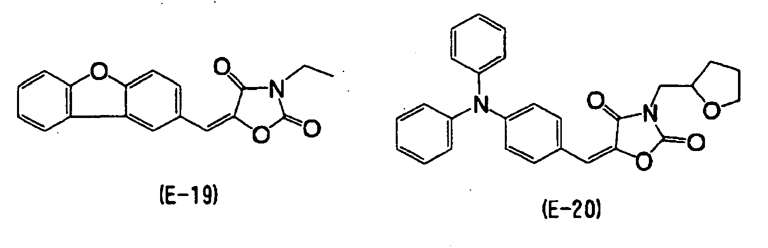

### (E) Cosensitizer

In the present invention, the ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl *p-*dimethylaminobenzoate, p-formyldimethylaniline, and *p-*methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H or Ge-H compounds described in JP-A-8-54735.

### (F) Other components

The ink composition of the present invention may comprise other components as necessary. Examples of the other components include UV absorver, antioxidant, antifading agent, conductive salt, solvent, highmolecular weight compound, surfactant, and soluble basic compound.

### UV absorber

In the present invention, a UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles. The metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-215272, pages 127 to 137.

The amount thereof added is appropriately selected according to the intended application, and it is preferably on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

With regard to the solvent that can be used in the ink composition of the present invention, it is preferable for a difference in the solubility parameter value (SP value) between rubber in rubber particles and the solvent used to be 2 or greater, and more preferably 3 or greater.

Examples of the solvent include ketone-based solvents such as acetone, methyl ethyl ketone, and diethyl ketone, alcohol-based solvents such as methanol, ethanol, 2-propanol, 1-propanol, 1-butanol; and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

### Surfactant

The ink composition of the present invention may contain a surfactant.

As the surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene / polyoxypropylene block copolymers, and cationic surfactants such as alkylamine salts and quaternary ammonium salts. Instead of the surfactant, an organofluoro compound may be used. The organofluoro compound is preferably hydrophobic. Examples of the organofluoro compound include fluorine-based surfactants, oil-like fluorine-based compounds (e.g. a fluorine oil), and solid fluorine compounds resin (e.g. tetrafluoroethylene resin), and those described in JP-B-57-9053 (8th to 17th columns) and JP-A-62-135826.

### Soluble basic compound

In the present invention, from the viewpoint of improving the storage stability of the ink composition, a soluble basic compound may be added to the ink composition. With regard to the soluble basic compound that can be used in the present invention, a known basic compound may be used; for example, a basic inorganic compound such as an inorganic salt or a basic organic compound such as an amine may preferably be used.

The above-mentioned soluble basic compound means that it is present in the ink composition even when the ink is cured by irradiation with actinic radiation. There is a possibility that addition of the above-mentioned basic compound to the ink composition might suppress curing of the ink composition by irradiation with actinic radiation. It is therefore preferable not to use a soluble basic compound, and if it is used it is preferable for it to be used in a range that does not suppress curing of the ink composition by irradiation with actinic radiation.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### (2-2) Properties of ink composition

As described above, the ink composition of the present invention comprises as essential components the polymerizable compound (A) and the polymerization initiator (B), and optionally contains a colorant, etc. With regard to these components, the polymerizable compound (A) is preferably contained at 20 to 90 wt %, and more preferably 30 to 80 wt %, relative to the weight of the entire ink composition, and the polymerization initiator (B) is preferably contained at 0.1 to 30 wt %, and more preferably 0.5 to 20 wt %; moreover, when a colorant is present, the colorant is preferably contained at 0.1 to 30 wt %, and more preferably 0.5 to 20 wt %, and it is desirable that the total of the components is 100 wt %.

When the ink composition thus obtained is used for inkjet recording, while taking into consideration dischargability, the viscosity of the ink composition at the discharge temperature (e.g. 40°C to 80°C, preferably 25°C to 30°C) is preferably 7 to 30 mPa·s, and more preferably 7 to 20 mPa·s. For example, the ink composition of the present invention has a viscosity at room temperature (25°C to 30°C) of preferably 35 to 500 mPa·s, and more preferably 35 to 200 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, uncured monomer can be reduced, and the odor can be reduced. Furthermore, ink spreading when ink droplets have landed can be suppressed, and as a result there is the advantage that the image quality is improved.

The surface tension of the ink composition of the present invention is preferably 20 to 30 mN/m, and yet more preferably 23 to 28 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 30 mN/m.

### (3) Mixture

The mixture of the present invention can be obtained by adding a basic solid compound to an ink composition. The method for addition is not particularly limited and a known method may be employed.

Specific examples thereof include a method in which a basic solid compound is added to a container holding an ink composition and a method in which an ink composition is charged into a container into which a basic solid compound has been put in advance.

The basic solid compound may be in any configuration as long as it is present within a container, and a method in which the interior of a container is covered with a basic solid compound may be employed.

Furthermore, the basic solid compound may be dispersed in the mixture, and relatively large particles or a solid may be added. In the present invention, the basic solid compound may be added in any configuration as long as the effect of neutralizing an acid generated in the ink composition can be exhibited.

In order to facilitate separation of the basic solid compound from the ink composition, it is also preferable to prepare a mixture of the basic solid compound and the ink composition by placing the basic solid compound in a mesh or net bag or container, etc. and adding this to the ink composition.

### (4) Method for storing ink composition

The method for storing an ink composition of the present invention involves contacting the ink composition with a basic solid compound. By contacting the ink composition with a basic solid compound, an acid in the ink composition can be neutralized, a curing reaction of the ink composition during storage or liquid transfer can be suppressed, and the storage stability of the ink composition is improved.

The method for storing an ink composition of the present invention is not limited to use in the interior of an image recording system but can broadly be used in any stage such as production, transport, etc. of an ink composition.

More specifically, in the production of an ink composition, the ink composition may be contacted with a basic solid compound in a container that stores the ink composition temporarily or for a long period of time. Examples also include a method in which an ink composition is contacted with a basic solid compound in a container for transporting the ink composition, a tube communicating with an ink head, or in the vicinity of the ink head. The contacting method may be any known method, and examples thereof include a method in which a basic solid compound is added to an ink composition or a method in which the inner surface of a container for an ink composition or the interior of a pipe is treated with a basic solid compound. However, the present invention is not limited to these examples.

### (5) Ink container

Furthermore, the ink container of the present invention houses an ink composition and a solid compound exhibiting basic properties. As the ink container, an ink server tank in an image recording system is preferable, but it may be any ink container used for production, transport, etc. of an ink.

### (6) Image formation method and system

The ink composition of the present invention is preferably used for formation of an image, and particularly preferably for inkjet recording.

An inkjet recording method that can suitably be employed in the present invention is explained below.

### (6-1) Image formation method

The present invention provides a method for forming an image by recording an image on a recording medium using the above-mentioned ink composition and curing it by irradiating with actinic radiation. The present invention is preferably a method for forming an image by discharging the above-mentioned ink composition onto a recording medium (support, recording material, etc.) and irradiating the ink composition discharged onto the recording medium with actinic radiation to thus cure the ink. That is, the image formation method of the present invention comprises:
(a) a step of recording an image on a recording medium using an ink composition; and
(b) a step of irradiating the recorded image with actinic radiation to thus carry out curing, wherein the ink composition employs the ink composition of the above-mentioned mixture.

When the image formation method of the present invention is used as an inkjet recording method, the inkjet recording method comprises:
(a') a step of discharging an ink composition onto a recording medium; and
(b') a step of curing the ink composition by irradiating the discharged ink composition with actinic radiation, wherein the ink composition employs the ink composition of the above-mentioned mixture.

The peak wavelength of the actinic radiation is preferably 200 to 600 nm, more preferably 300 to 450 nm, and yet more preferably 350 to 420 nm. The output of the actinic radiation is preferably no greater than 2,000 mJ/cm², and is more preferably 10 to 2,000 mJ/cm², yet more preferably 20 to 1,000 mJ/cm², and particularly preferably 50 to 800 mJ/cm².

In the present invention, when an ink composition is used for inkjet recording, it is preferable to add a basic solid compound into an ink server tank storing the ink composition and house the ink composition and the basic solid compound as a mixture in the ink tank.

In this case, when carrying out inkjet recording, it is preferable to discharge the ink composition alone from the mixture, and the basic solid compound is preferably made to remain within the container without being discharged. Specific examples of the method include a method in which the basic solid' compound is filtered from the ink container and the ink composition is discharged and a method in which the basic solid compound is placed in a net-like bag or container having a finer gauge than the basic compound to give a mixture with the ink composition.

It is preferable to remove the basic solid compound when discharging since the curability of the ink composition after it has been discharged is not inhibited.

### (6-1-1) a step of recording an image on a recording medium using an ink composition

When the ink composition or the inkjet recording ink composition of the present invention is discharged onto the surface of the above-mentioned recording medium, the ink composition or the inkjet recording ink composition is preferably discharged after being heated to preferably 25°C to 80°C, and more preferably 25°C to 50°C, so as to reduce the viscosity of the ink composition to preferably 7 to 30 mPa·s, and more preferably 7 to 20 mPa·s. In particular, it is preferable to use the ink composition having an ink viscosity at 25°C of 35 to 500 mPa·s since a large effect can be obtained. By employing this method, high discharge stability can be realized. The radiation curing type ink composition such as the ink composition used in the present invention generally has a viscosity that is higher than that of a normal ink composition or a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature is desirably ±5°C of a set temperature, preferably ±2°C of the set temperature, and more preferably ±1°C of the set temperature.

### (6-1-2) Step of irradiating recorded image with actinic radiation to carry out curing

The above-mentioned ink composition recorded as an image by being discharged onto the surface of a recording medium is cured by irradiation with actinic radiation. This is due to decomposition of a polymerization initiator contained in the ink composition of the present invention, thereby causing a polymerizable compound to undergo radical polymerization and/or cationic polymerization to thus carry out curing.

Examples of radiation that can be used here include α rays, γ rays, an electron beam, X rays, ultraviolet rays, visible light, and infrared light. Although it depends on the absorption characteristics of a sensitizing dye, it is desirable that the peak wavelength of the actinic radiation is for example 200 to 600 nm, preferably 300 to 450 nm, and more preferably 350 to 450 nm. In the present invention, the polymerization initiation system has sufficient sensitivity even for low output actinic radiation. Therefore, it is desirable that the output of the actinic radiation is, for example, 2,000 mJ/cm² or less, preferably 10 to 2,000 mJ/cm², more preferably 20 to 1,000 mJ/cm², and yet more preferably 50 to 800 mJ/cm² as an irradiation energy. Furthermore, it is desirable that the actinic radiation is applied with an exposure area illumination intensity of, for example, 10 to 2,000 mW/cm², and preferably 20 to 1,000 mW/cm².

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (e.g. 0.01 to 0.5 sec., preferably 0.01 to 0.3 sec., and more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted, and as a result the odor can be reduced.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such an image-forming method or an ink jet recording method, it is possible to maintain a uniform dot diameter for landed ink even for various types of recording media having different surface wettability, thereby improving the image quality. In order to obtain a color image, it is preferable to superimpose colors in order from those with a low lightness. By superimposing inks in order from one with low lightness, it is easy for radiation to reach a lower ink, the curing sensitivity is good, the amount of residual monomer decreases, odor is reduced, and an improvement in adhesion can be expected. Furthermore, although it is possible to discharge all colors and then expose them at the same time, it is preferable to expose one color at a time from the viewpoint of promoting curing.

In this way, the above-mentioned ink composition of the present invention is cured by irradiation with actinic radiation to thus form a hydrophobic image on the surface of the hydrophilic support.

In particular, in the present invention, it is preferable to use a hydrophilic support as a recording medium and form a hydrophobic image by means of an ink composition, and a lithographic printing plate obtained by, for example, forming a hydrophobic image on a hydrophilized aluminum support can be cited as a preferred example.

### (6-2) Image recording system

An image recording system used in the present invention is not particularly limited; it is preferable to use an inkjet recording device as the image recording system, and a commercial inkjet recording device may be used as the inkjet recording device.
That is, in the present invention, recording on a recording medium may be carried out using a commercial inkjet recording device.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of 1 to 100 pL, and preferably 8 to 30 pL, at a resolution of 320 x 320 to 4,000 x 4,000dpi, preferably 400 x 400 to 1,600 x 1,600dpi, and more preferably 720 x 720 dpi. Here, dpi referred to in the present invention means the number of dots per 2.54 cm.

In the present invention, it is preferable to add a basic solid compound to the main tank, and it is also preferable to add a basic solid compound to the ink supply tank immediately before the inkjet head.

As described above, since it is desirable for the radiation curing type ink to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

In accordance with the present invention, there can be provided a mixture for which the storage stability for an ink composition is excellent. Furthermore, in accordance with the present invention, there can be provided a method for storing an ink composition so as to give excellent storage stability. Moreover, in accordance with the present invention, there can be provided an ink container giving excellent storage stability for an ink composition, and an image formation method employing the ink composition.

### Examples

The present invention is explained more specifically by reference to Examples and Comparative Examples below. However, the present invention should not be construed as being limited by these examples.

'Parts' described below means 'parts by weight' unless otherwise specified.

### Preparation of inorganic basic solid compound

### Preparation of inorganic basic solid compound A

1,000 parts of glass beads having a size of 0.5 to 1 mm (manufactured by Toshiba Glass) was charged into 2,000 parts of methanol, 200 parts of 3-aminopropyltrimethoxysilane (manufactured by Chisso Corporation) was added thereto, and the mixture was stirred with a Three-One motor at 500 rpm and at room temperature for 5 hours. Following this, the glass beads were filtered, washed using 2,000 parts of acetone, and dried at room temperature for 1 day to give about 1,100 parts of an inorganic basic solid compound A, which was basic glass beads.

### Preparation of inorganic basic solid compound B

600 parts of styrene (manufactured by Tokyo Chemical Industry Co., Ltd.), 200 parts of divinylbenzene (manufactured by Tokyo Chemical Industry Co., Ltd.), and 200 parts of N,N-dimethylaminopropyl methacrylate (manufactured by Tokyo Chemical Industry Co., Ltd.) were charged into 2,000 parts of water, 100 parts of PVA-205 (polyvinyl alcohol resin, manufactured by Kuraray Co., Ltd.) (10% aqueous solution) was added thereto, and the mixture was stirred using a homogenizer at 2,000 rpm under a flow of nitrogen at 70°C, thus dispersing the monomers in water. About 30 minutes later, 10 parts of V60 (manufactured by Wako Pure Chemical Industries, Ltd.) was charged into the mixture to thus carry out pearl polymerization to give an inorganic basic solid compound B having an average particle size of 0.5 mm, which was basic polystyrene beads.

### Example 1

### Preparation of Ink

### Yellow Ink 1

| | |
|---|---|
| C.I. Pigment Yellow 13 | 5 parts by weight |
| DISPERBYK 168 (pigment-dispersing agent, manufactured by BYK Chemie) | 4 parts by weight |
| Cationic photopolymerization initiator: triphenylsulfonium salt (UVI-6992, manufactured by The Dow Chemical Company) | 6 parts by weight |
| Sensitizing dye: 9,10-dibutoxyanthracene | 3 parts by weight |

| Polymerizable compounds | |
|---|---|
| Monomer: 3,4-epoxycyclohexenylmethyl-3',4'-epoxycyclohexanecarboxylate (Celloxide 2021A: manufactured by Daicel-UCB Co., Ltd.) | 30 parts by weight |
| Monomer: bis(3-ethyl-3-oxetanylmethyl) ether (OXT-221: manufactured by Toagosei Co., Ltd.) | 37 parts by weight |

### Magenta Ink 1

| | |
|---|---|
| C.I. Pigment Red 57:1 5 parts by weight DISPERBYK 168 (pigment-dispersing agent, manufactured by BYK Chemie) | 4 parts by weight |
| Cationic photopolymerization initiator: triphenylsulfonium salt (UVI-6992, manufactured by The Dow Chemical Company) | 6 parts by weight |
| Sensitizing dye: 9,10-dibutoxyanthracene | 3 parts by weight |

| Polymerizable compounds | |
|---|---|
| Monomer: 3,4-epoxycyclohexylmethyl-3',4'-epoxycyclohexanecarboxylate (Celloxide 2021A: manufactured by Daicel-UCB Co., Ltd.) | 30 parts by weight |
| Monomer: bis(3-ethyl-3-oxetanylmethyl) ether (OXT-221: manufactured by Toagosei Co., Ltd.) | 37 parts by weight |

### Cyan ink 1

| | |
|---|---|
| C.I. Pigment Blue 15:3 | 4 parts by weight |
| DISPERBYK 168 (pigment-dispersing agent, manufactured by BYK Chemie). | 3 parts by weight |
| Cationic photopolymerization initiator: triphenylsulfonium salt (UVI-6992, manufactured by The Dow Chemical Company) | 6 parts by weight |
| Sensitizing dye: 9,10-dibutoxyanthracene | 3 parts by weight |

| Polymerizable compounds | |
|---|---|
| Monomer: 3,4-epoxycyclohexylmethyl-3',4'-epoxycyclohexanecarboxylate (Celloxide 2021A: manufactured by Daicel-UCB Co., Ltd.) | 30 parts by weight |
| Monomer: bis(3-ethyl-3-oxetanylmethyl) ether (OXT-221: manufactured by Toagosei Co., Ltd.) | 39 parts by weight |

### Black ink 1

| | |
|---|---|
| C.I. Pigment Black 7 | 4 parts by weight |
| DISPERBYK 168 (pigment-dispersing agent, manufactured by BYK Chemie) | 3 parts by weight |
| Cationic photopolymerization initiator: triphenylsulfonium salt (UVI-6992, manufactured by The Dow Chemical Company) | 6 parts by weight |
| Sensitizing dye: 9,10-dibutoxyanthracene | 3 parts by weight |

| Polymerizable compounds | |
|---|---|
| Monomer: 3,4-epoxycyclohexylmethyl-3',4'-epoxycyclohexanecarboxylate (Celloxide 2021A: manufactured by Daicel-UCB Co., Ltd.) | 30 parts by weight |
| Monomer: bis(3-ethyl-3-oxetanylmethyl) ether (OXT-221: manufactured by Toagosei Co., Ltd.) | 39 parts by weight |

### White ink 1

| | |
|---|---|
| KRONOS 2300 (titanium oxide, manufactured by KRONOS) | 15.0 parts by weight |
| DISPERBYK 168 (pigment-dispersing agent, manufactured by BYK Chemie) | 3 parts by weight |
| Cationic photopolymerization initiator: triphenylsulfonium salt (UVI-6992, manufactured by The Dow Chemical Company) | 6 parts by weight |
| Sensitizing dye: 9,10-dibutoxyanthracene | 3 parts by weight |

| Polymerizable compounds | |
|---|---|
| Monomer: 3,4-epoxycyclohexylmethyl-3',4'-epoxycyclohexanecarboxylate (Celloxide 2021A: manufactured by Daicel-UCB Co., Ltd.) | 28 parts by weight |
| Monomer: bis(3-ethyl-3-oxetanylmethyl) ether (OXT-221: manufactured by Toagosei Co., Ltd.) | 30 parts by weight |

The crude yellow ink 1, magenta ink 1, cyan ink 1, black ink 1, and white ink 1 prepared above were filtered using a filter having an absolute filtration accuracy of 2 µm to give Inks of each color.

Furthermore, in the ink composition of each color, the ink viscosity at the ink discharge temperature was in the range of 7 to 20 mPa·s.

### Image recording system and method

When recording an image (printing), a printing system was used that was equipped with a one-pass head unit (recording width 542 mm) provided with 15 sets of head units having a nozzle density of 1080 dpi in which three shear mode piezo heads (KM512SH manufactured by Konica Minolta: minimum droplet size 4 pL, number of nozzles 512, nozzle density 360 nozzles/25.4 mm) were arranged in a staggered manner in the recording medium transport direction to thus achieve printing across the width direction of a recording medium. A 10 L ink tank having a pressure reducing function was charged with an ink and 500 g of a basic solid compound A in a 1 µm mesh bag, the pressure was reduced to -38 kPa to thus remove gas dissolved in the ink, and this ink was introduced into the above-mentioned head unit via a flexible polytetrahydrofuran tube having an internal diameter of 2 mm through a hydrostatic pressure control tank (capacity 50 mL). By controlling the height of the hydrostatic pressure tank relative to the head, the internal pressure of the head could be adjusted to -5.0 kPa, thus controlling the shape of the meniscus in the head nozzle. Furthermore, the ink temperature within the head was made to be 55°C by means of a heater incorporated into the head. Discharge was carried out in binary mode with a head drive voltage of 26 V and a drive frequency of 23 kHz. The printing pitch was 1080 dpi in the recording medium width direction x 2,000 dpi in the recording medium transport direction (head scan speed 292 mm/s), that is, one pass printing was carried out while continuously transporting the recording medium. Furthermore, a UV light source (two VZero 270 units manufactured by Integration Technology disposed in the recording medium width direction) was placed on the downstream side of the head in the recording medium transport direction, and the ink printed on the recording medium was irradiated with UV rays. As cleaning means for the head, means for carrying out suction of the head nozzles and preliminary discharge was provided, and cleaning was carried out as appropriate.

In this process, the basic solid compound was present in the mesh bag and was not introduced into the head unit.

The two types of evaluation below (A and B) were carried out using the above-mentioned inkjet recording device.

### Evaluation A (continuous discharge reliability)

The above-mentioned inkjet system was allowed to stand under environmental conditions of 45°C for 30 days with the ink charged. Following this, preliminary discharged of the ink was carried out for about 15 minutes, the system was subsequently operated continuously for 8 hours, and the number of nozzles that had caused printing defects (no discharge, twist, etc.) was counted.
++: no defects
+: less than 10 defective nozzles
-: 10 or more defective nozzles/1 head for all cases

### Evaluation B (change in ink physical properties)

The above-mentioned inkjet system was allowed to stand under environmental conditions of 45°C for 30 days with the ink charged. Following this, the ink was taken out and its viscosity was measured at 25°C using a B-type viscometer.
++: viscosity variation 10% or less
+: viscosity variation less than 30%
-: viscosity variation 30% or more

### Examples 2 to 14 and Comparative Examples 1 and 2

In Examples 2 to 14, an image (printing) was formed in the same manner as in Example 1 except that the basic solid compound A of Example 1 was changed to the corresponding basic solid compound shown in the table below, and the amount of basic solid compound added was changed as shown in the table below.

In Comparative Example 1, an image (printing) was formed in the same manner as in Example 1 except that no basic solid compound was used.

In Comparative Example 2, an image (printing) was formed in the same manner as in Example 1 except that glass beads were used instead of the basic solid compound A.

The results are given in the table below.

**(Table 1)**

| Example No. | Basic solid compound | | Average particle size (mm) | Amount added (g) | Evaluation A | Evaluation B |
|---|---|---|---|---|---|---|
| Ex. 1 | (1) | Basic solid compound A | 0.5-1 | 500 | ++ | ++ |
| Ex. 2. | (1) | Basic solid compound A | 0.5-1 | 100 | ++ | ++ |
| Ex. 3 | (1) | Basic solid compound A | 0.5-1 | 2000 | ++ | ++ |
| Ex. 4 | (2) | Basic solid compound B | 0.5 | 500 | ++ | ++ |
| Ex. 5 | (3) | Amberlite IRA402BL CL (manufactured by Organo Corporation) | 0.5-1 | 500 | ++ | ++ |
| Ex. 6 | (4) | Amberlite IRA411 CL (manufactured by Organo Corporation) | 0.5-1 | 500 | ++ | ++ |
| Ex. 7 | (5) | Amberlite IRA67 CL (manufactured by Organo Corporation) | 0.5-1 | 500 | ++ | ++ |
| Ex. 8 | (6) | Active alumina 100 mesh (manufactured by Wako Pure Chemical Industries, Ltd.) | 1 | 500 | ++ | ++ |
| Ex. 9 | (7) | Basic zinc carbonate (manufactured by Wako Pure Chemical Industries, Ltd.) | 0.8 | 500 | ++ | ++ |
| Ex. 10 | (8) | Calcium carbonate (manufactured by Wako Pure Chemical Industries, Ltd.) | 1 | 500 | ++ | ++ |
| Ex. 11 | (9) | (1)/(2) = 50/50 (wt %) | 0.5-1 | 500 | ++ | ++ |
| Ex. 12 | (10) | (1)/(3) = 50/50 (wt %) | 0.5-1 | 500 | ++ | ++ |
| Ex. 13 | (11) | (1)/(6)/(8) = 50/25/25 (wt %) | 0.5-1 | 500 | ++ | ++ |
| Ex. 14 | (12) | (2)/(5)/(6) = 50/25/25 (wt %) | 0.5-1 | 500 | ++ | ++ |
| Comp. Ex. 1 | - | None | - | - | - | - |
| Comp. Ex. 2 | (13) | Glass beads (manufactured by Toshiba Glass) | 0.5-1 | 500 | - | - |

## Claims

1. A mixture comprising an ink composition and a basic solid compound in the form of beads having an average particle size of 0.05 to 5 mm,
wherein the basic solid compound is placed in a mesh or net bag or container and added to the ink composition.

2. The mixture according to Claim 1, wherein the basic solid compound is an inorganic basic solid compound and/or an organic basic solid compound.

3. The mixture according to Claim 2, wherein the inorganic basic solid compound comprises at least one inorganic basic solid compound selected from the group consisting of an inorganic salt selected from the group consisting of a carbonate, a phosphate and a carboxylate, a metal oxide, a metal sulphide, a metal nitride, and those obtained by treating the surface of these inorganic solid compounds with a base.

4. The mixture according to Claim 2, wherein the inorganic basic solid compound comprises basic glass beads obtained by treating glass beads with a silane coupling agent so as to make them basic.

5. The mixture according to Claim 2, wherein the organic basic solid compound comprises organic polymer beads having a basic functional group on the surface.

6. The mixture according to any one of Claims 1 to 5, wherein the ink composition comprises a cationically polymerizable compound and a photo-acid generator.

7. The mixture according to Claim 6, wherein the cationically polymerizable compound is an oxetane compound and/or an epoxy compound.

8. The mixture according to Claim 7, wherein the oxetane compound comprises at least one compound selected from the group consisting of (1) to (3): 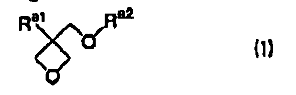 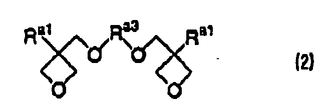 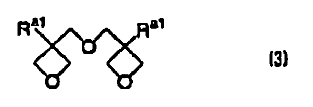 R^{a1} denotes a hydrogen atom, an alkyl group having 1 to 6 carbons, a fluoroalkyl group having 1 to 6 carbons, an allyl group, an aryl group, a furyl group, or a Thienyl group; when there are two R^{a1} in the molecule, they may be identical to or different from each other; R^{a2} denotes a hydrogen atom, an alkyl group having 1 to 6 carbons, an alkenyl group having 2 to 6 carbons, a group having an aromatic ring, an alkylcarbonyl group having 2 to 6 carbons, an Alkoxycarbonyl group having 2 to 6 carbons, or an N-alkylcarbamoyl group having 2 to 6 carbons; and R^{a3} denotes a linear or branched alkylene group, a linear or branched poly(alkyleneoxy) group, a linear or branched unsaturated hydrocarbon group, a carboxyl group-containing alkylene group, or a carbamoyl group-containing alkylene group.

9. A method for storing an ink composition, the method comprising:
a step of preparing an ink composition comprising a cationically polymerizable compound and a photo-acid generator; and
a step of contacting the ink composition with a basic solid compound in the form of beads having an average particle size of 0.05 to 5 mm,
wherein the basic solid compound is placed in a mesh or net bag or container and added to the ink composition.

10. An ink container housing an ink composition comprising a cationically polymerizable compound and a photo-acid generator, and a basic solid compound in the form of beads having an average particle size of 0.05 to 5 mm, wherein the basic solid compound is placed in a mesh or net bag or container and added to the ink composition.

11. A method for forming an image, the method comprising:
a step of removing the basic solid compound from the mixture according to any one of Claims 1 to 8;
a step of recording an image on a recording medium using the ink composition contained in the mixture; and
a step of irradiating the recorded image with actinic radiation so as to carry out curing.

12. The mixture according to any one of Claims 1 to 8, wherein the basic solid compound is added at 0.5 to 60 wt% relative to the total amount of the mixture.

13. The mixture according to any one of Claims 1 to 8, wherein the basic solid compound is in the form of beads having an average particle size of 0.5 to 5 mm.

14. The mixture according to any one of Claims 1 to 8, wherein the basic solid compound has a solubility at 25°C in 100 g of the ink composition of 1 g or less.

15. The method for storing an ink composition according to Claim 9, wherein a viscosity variation of the ink composition measured at 25°C using a B-type viscometer is 10% or less after standing under environmental conditions of 45°C for 30 days.

## Patentansprüche

1. Mischung, umfassend eine Tintenzusammensetzung und eine basische feste Verbindung in der Form von Kügelchen mit einer durchschnittlichen Teilchengröße von 0.05 bis 5 mm, worin die basische feste Verbindung in einem Sieb- oder Netzbeutel oder -behälter angeordnet und zu der Tintenzusammensetzung gegeben ist.

2. Mischung nach Anspruch 1, worin die basische feste Verbindung eine anorganische basische feste Verbindung und/oder eine organische basische feste Verbindung ist.

3. Mischung nach Anspruch 2, worin die anorganische basische feste Verbindung zumindest eine anorganische basische feste Verbindung enthält, ausgewählt aus der Gruppe bestehend aus einem anorganischen Salz, ausgewählt aus der Gruppe bestehend aus einem Carbonat, Phosphat und Carboxylat, Metalloxid, Metallsulfid, Metallnitrid und solchen, erhalten durch Behandlung der Oberfläche dieser anorganischen festen Verbindungen mit einer Base.

4. Mischung nach Anspruch 2, worin die anorganische basische feste Verbindung basische Glaskügelchen enthält, erhalten durch Behandeln von Glaskügelchen mit einem Silankupplungsmittel, um diese basisch zu machen.

5. Mischung nach Anspruch 2, worin die organische basische feste Verbindung organische Polymerkügelchen mit einer basischen funktionellen Gruppe auf der Oberfläche umfasst.

6. Mischung nach einem der Ansprüche 1 bis 5, worin die Tintenzusammensetzung eine kationisch polymerisierbare Verbindung und einen Photosäureerzeuger umfasst.

7. Mischung nach Anspruch 6, worin die kationisch polymerisierbare Verbindung eine Oxetanverbindung und/oder Epoxyverbindung ist.

8. Mischung nach Anspruch 7, worin die Oxetanverbindung zumindest eine Verbindung umfasst, ausgewählt aus der Gruppe bestehend aus (1) bis (3): 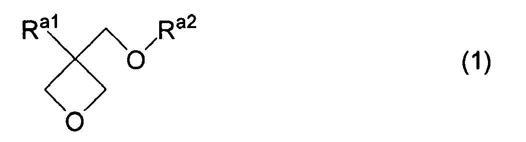 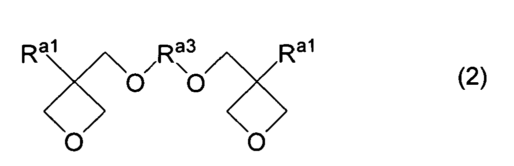 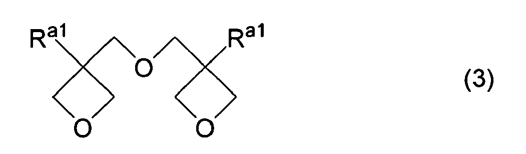 worin R^{a1} ein Wasserstoffatom, eine Alkylgruppe mit 1 bis 6 Kohlenstoffatomen, Fluoralkylgruppe mit 1 bis 6 Kohlenstoffatomen, Allylgruppe, Arylgruppe, Furylgruppe oder Thienylgruppe ist, worin dann, wenn zwei R^{a1} im Molekül vorhanden sind, diese identisch oder verschieden voneinander sein können, R^{a2} ein Wasserstoffatom, eine Alkylgruppe mit 1 bis 6 Kohlenstoffatomen, Alkenylgruppe mit 2 bis 6 Kohlenstoffatomen, Gruppe mit einem aromatischen Ring, Alkylcarbonylgruppe mit 2 bis 6 Kohlenstoffatomen, Alkoxycarbonylgruppe mit 2 bis 6 Kohlenstoffatomen oder N-Alkylcarbamoylgruppe mit 2 bis 6 Kohlenstoffatomen ist; und R^{a3} eine lineare oder verzweigte Alkylengruppe, lineare oder verzweigte Poly(alkylenoxy)gruppe, lineare oder verzweigte, ungesättigte Kohlenwasserstoffgruppe, Carboxylgruppenhaltige Alkylengruppe oder Carbamoylgruppen-haltige Alkylengruppe ist.

9. Verfahren zum Lagern einer Tintenzusammensetzung, wobei das Verfahren umfasst:
einen Schritt zur Herstellung einer Tintenzusammensetzung, umfassend eine kationisch polymerisierbare Verbindung und einen Photosäuregenerator; und
einen Schritt des Kontaktierens der Tintenzusammensetzung mit einer basischen festen Verbindung in der Form von Kügelchen mit einer durchschnittlichen Teilchengröße von 0,05 bis 5 mm,
worin die basische feste Verbindung in einem Sieb- oder Netzbeutel oder -behälter angeordnet und zu der Tintenzusammensetzung gegeben wird.

10. Tintenbehälter, der eine Tintenzusammensetzung beinhaltet, umfassend eine kationisch polymerisierbare Verbindung und einen Photosäuregenerator, und eine basische feste Verbindung in der Form von Kügelchen mit einer durchschnittlichen Teilchengröße von 0,05 bis 5 mm, worin die basische feste Verbindung in einem Sieb- oder Netzbeutel oder -behälter angeordnet und zu der Tintenzusammensetzung gegeben ist.

11. Verfahren zur Bildung eines Bildes, wobei das Verfahren umfasst:
einen Schritt zur Entfernung der basischen festen Verbindung von der Mischung gemäß einem der Ansprüche 1 bis 8;
einen Schritt der Aufzeichnung eines Bildes auf einem Aufzeichnungsmedium unter Verwendung der Tintenzusammensetzung, die in der Mischung enthalten ist; und
einen Schritt der Bestrahlung des aufgezeichneten Bildes mit aktinischer Strahlung zur Durchführung der Härtung.

12. Mischung nach einem der Ansprüche 1 bis 8, worin die basische feste Verbindung zu 0,5 bis 60 Gew.-% gegeben ist, bezogen auf die Gesamtmenge der Mischung.

13. Mischung nach einem der Ansprüche 1 bis 8, worin die basische feste Verbindung in der Form von Kügelchen mit einer durchschnittlichen Teilchengröße von 0,5 bis 5 mm ist.

14. Mischung nach einem der Ansprüche 1 bis 8, worin die basische feste Verbindung eine Löslichkeit bei 25°C in 100 g der Tintenzusammensetzung von 1 g oder weniger hat.

15. Verfahren zum Lagern einer Tintenzusammensetzung nach Anspruch 9, worin eine Viskositätsvariation der Tintenzusammensetzung, gemessen bei 25°C unter Verwendung eines Viskosimeters vom B-Typ, 10% oder weniger nach Stehenlassen unter Umgebungsbedingungen von 45°C für 30 Tage ist.

## Revendications

1. Mélange comprenant une composition d'encre et un composé solide basique sous la forme de perles ayant une taille de particule moyenne de 0,05 à 5 mm,
dans lequel le composé solide basique est placé dans un sac à mailles ou filet ou un conteneur et est ajouté à la composition d'encre.

2. Mélange selon la revendication 1, dans lequel le composé solide basique est un composé solide inorganique basique et/ou un composé solide organique basique.

3. Mélange selon la revendication 2, dans lequel le composé solide inorganique basique comprend au moins un composé solide inorganique basique sélectionné à partir du groupe constitué par un sel inorganique sélectionné à partir du groupe constitué par un carbonate, un phosphate et un carboxylate, un oxyde métallique, un sulfure métallique, un nitrure métallique, et ceux obtenus en traitant la surface de ces composés solides inorganiques avec une base.

4. Mélange selon la revendication 2, dans lequel le composé solide inorganique basique comprend des perles de verre basiques obtenues en traitant des perles de verre avec un agent adhésif au silane afin de les rendre basiques.

5. Mélange selon la revendication 2, dans lequel le composé solide organique basique comprend des perles de polymère organique ayant un groupe fonctionnel basique sur la surface.

6. Mélange selon l'une quelconque des revendications 1 à 5, dans lequel la composition d'encre comprend un composé pouvant être polymérisé de façon cationique et un générateur photo-acide.

7. Mélange selon la revendication 6, dans lequel le composé pouvant être polymérisé de façon cationique est un composé d'oxétane et/ou un composé époxy.

8. Mélange selon la revendication 7, dans lequel le composé d'oxétane comprend au moins un composé sélectionné à partir du groupe constitué par (1) à (3) : 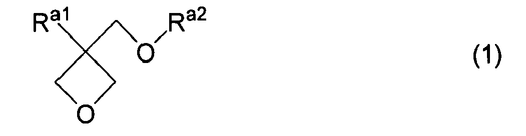 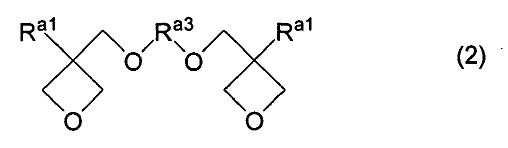 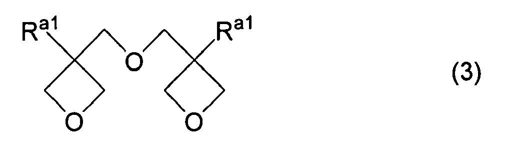 R^{a1} désigne un atome d'hydrogène, un groupe alkyle ayant de 1 à 6 carbones, un groupe fluoroalkyle ayant de 1 à 6 carbones, un groupe allylique, un groupe aryle, un groupe furyle, ou un groupe thiényle ; quand il y a deux R^{a1} dans la molécule, ils peuvent être identiques ou différents l'un de l'autre ; R^{a2} désigne un atome d'hydrogène, un groupe alkyle ayant de 1 à 6 carbones, un groupe alcényle ayant de 2 à 6 carbones, un groupe ayant un noyau aromatique, un groupe alkylcarbonyle ayant de 2 à 6 carbones, un groupe Alcoxycarbonyle ayant de 2 à 6 carbones, ou un groupe N-alkylcarbamoyle ayant de 2 à 6 carbones ; et R^{a3} désigne un groupe alkylène linéaire ou ramifié, un groupe poly(alkylèneoxy) linéaire ou ramifié, un groupe hydrocarbure non saturé linéaire ou ramifié, un groupe alkylène contenant un groupe carboxyle, ou un groupe alkylène contenant un groupe carbamoyle.

9. Procédé pour stocker une composition d'encre, le procédé comprenant :
une étape de préparation d'une composition d'encre comprenant un composé pouvant être polymérisé de façon cationique et un générateur photo-acide ; et
une étape de mise en contact de la composition d'encre avec un composé solide basique sous la forme de perles ayant une taille de particule moyenne de 0,05 à 5 mm,
dans lequel le composé solide basique est placé dans un sac à mailles ou filet ou un conteneur et est ajouté à la composition d'encre.

10. Conteneur d'encre logeant une composition d'encre comprenant un composé pouvant être polymérisé de façon cationique et un générateur photo-acide, et un composé solide basique sous la forme de perles ayant une taille de particule moyenne de 0,05 à 5 mm, dans lequel le composé solide basique est placé dans un sac à mailles ou filet ou un conteneur et est ajouté à la composition d'encre.

11. Procédé pour former une image, le procédé comprenant :
une étape d'enlèvement du composé solide basique du mélange selon l'une quelconque des revendications 1 à 8 ;
une étape d'enregistrement d'une image sur un support d'enregistrement en utilisant la composition d'encre contenue dans le mélange ; et
une étape d'irradiation de l'image enregistrée par un rayonnement actinique afin d'effectuer un durcissement.

12. Mélange selon l'une quelconque des revendications 1 à 8, dans lequel le composé solide basique est ajouté à 0,5 à 60 % en poids par rapport à la quantité totale du mélange.

13. Mélange selon l'une quelconque des revendications 1 à 8, dans lequel le composé solide basique est sous la forme de perles ayant une taille de particule moyenne de 0,5 à 5 mm.

14. Mélange selon l'une quelconque des revendications 1 à 8, dans lequel le composé solide basique a une solubilité à 25 °C dans 100 g de la composition d'encre de 1 g ou moins.

15. Procédé pour stocker une composition d'encre selon la revendication 9, dans lequel une variation de viscosité de la composition d'encre mesurée à 25 °C en utilisant un viscosimètre de type B est de 10 % ou moins après maintien sous des conditions environnementales de 45 °C pendant 30 jours.
